# EUROPEAN PATENT SPECIFICATION

(11) **EP 1 927 885 B1**
(45) Date of publication and mention of the grant of the patent: **27.07.2011**
(21) Application number: 06077121.9
(22) Date of filing: 28.11.2006
(51) Int. Cl.: G02F 1/1333, G02F 1/139, G02F 1/1343

(54) **Multistable liquid crystal device**
Multistabile Flüssigkristallvorrichtung
Dispositif à cristaux liquides multistable

(43) Date of publication of application: 04.06.2008
(73) Proprietor: Stichting Katholieke Universiteit genoemd Radboud Universiteit Nijmegen, 6525 ED Nijmegen (NL)
(72) Inventor: Rasing, Theodorus Henricus Maria, 6523 LR Nijmegen (NL); Lazarenko, Sergiy Volodymyrovych, 6525 JA Nijmegen (NL); Musevic, Igor, 1000 Ljubljana (SI); Skarabot, Miha, 1351 Brezovica (SI); Uplaznik, Marko, 3312 Prebold (SI)
(74) Representative: van Loon, C.J.J.

(56) References cited:
- EP-A1- 1 271 226
- US-A1- 2005 270 461
- US-B1- 6 327 016
- GUO JIAN-XIN ET AL: "Three-terminal bistable twisted nematic liquid crystal displays" APPLIED PHYSICS LETTERS, AIP, AMERICAN INSTITUTE OF PHYSICS, MELVILLE, NY, US, vol. 77, no. 23, 4 December 2000 (2000-12-04), pages 3716-3718, XP012026810 ISSN: 0003-6951
- KIM JONG-HYUN ET AL: "Surface alignment bistability of nematic liquid crystals by orientationally frustrated surface patterns" APPLIED PHYSICS LETTERS, AIP, AMERICAN INSTITUTE OF PHYSICS, MELVILLE, NY, US, vol. 78, no. 20, 14 May 2001 (2001-05-14), pages 3055-3057, XP012028033 ISSN: 0003-6951

## Description

The invention relates to a liquid crystal device provided with a front panel, a back panel, at least one of which is provided with a profiled inside surface containing a plurality of recesses, each of which is formed by a bottom surface and a plurality of sidewalls, the liquid crystal device further being provided with liquid crystal molecules, the liquid crystal molecules being located between the front panel and the back panel and some of the liquid crystal molecules being contained in the recesses.

A liquid crystal can be for instance used in liquid crystal display devices, which are commonly applied in home entertainment devices, especially television screens, and also in computer displays, displays for cellular telephones and other displays. Liquid crystal devices are also used for intensity or phase modulation of light and light shutters for protection purposes.

Typically, the device comprises a front panel and a back panel and a liquid crystal, having liquid crystal molecules therebetween. The liquid crystal molecules are usually rod-shaped, but not necessarily, as examples are known that molecules of disc-like shape also form liquid crystalline phases. For liquid crystal display systems, the front panel and the back panel are each usually provided with a polarisation filter. Other filters can be incorporated as well. For such application, the polarisation direction of light transmitted by the filter of the front panel is normally perpendicular to the polarisation direction of light transmitted by the filter of the back panel. The front panel, as well as the back panel is typically treated on the inside in such a way as to align any liquid crystal molecules adjacent to the panel in a certain direction relative to the direction of the polarisation direction of the filter of the panel adjacent to the liquid crystal molecules. Furthermore, such a display may be provided with a back light unit serving as a light source, which emits light directed through the back panel towards the front panel. Also, each panel may comprise a plurality of electrodes for locally generating an external field, for instance electric, to bring the liquid crystal molecules in the device out of alignment.

In the absence of an electric field generated by the electrodes on the panels, the liquid crystal molecules adjacent to one of the panels align in a certain direction relative to the polarisation direction of the filter of this panel. A feature for these devices used as a polarisation rotator is that, while the longitudinal axes of the rod-shaped liquid crystal molecules extend within a plane parallel to the front panel and the back panel, the orientation of the liquid crystal molecules is slightly rotated in each layer parallel to the panels with respect to the previous layer, as seen from one of the panels to the other. Other devices based on liquid crystals are known, that exploit birefringence and not necessarily the polarisation rotation to modulate light. In this case other types of light polarisation than linear are used to modulate light intensity.

Using a polarisation filter, any polarisation component perpendicular to this direction can be filtered out. The twisted layers of the liquid crystal cause the polarisation to be rotated along with the orientation of the liquid crystal molecules. Light exiting the liquid crystal will be polarised in the direction of the liquid crystal molecules adjacent to the front panel, which is also the polarisation direction in which light is transmitted by the filter of the front panel.

In conventional applications, electrodes present near that location generate an electric field, thereby disturbing the alignment of the liquid crystal molecules with respect to the filter of, for example, the back front panel. The light exiting the liquid crystal will not be in the correct polarisation direction to be transmitted by the filter of the front panel. The alignment may even be disturbed such that the light is fully blocked by the filter.

In order to achieve a more energy efficient device, it has been proposed that the treated surfaces have a structure providing the liquid crystal device with multistability. It is understood that multistability means that several different structures of liquid crystal inside the device are thermodynamically stable in the absence of external fields.

For example, treated surfaces suitable for providing multistability have been realised using suitable tools, such as an atomic force microscope (AFM) method. This method focuses on modifying a surface structure to provide alignment, using complicated tools. This causes the method to be unsuitable for commercial use, since it is both time-consuming and costly.
EP1271226 discloses a boxed surface. A bottom surface is provided as a clean glass substrate having an Indium Tin Oxide layer spin coated. The bottom surface is provided from a glass which is known to have a memory effect.

Guo et al:"Three-terminal bistable twisted nematid liquid crystal displays" Applied Physics Letters, vol 77, no. 23 shows a comb on plane structure having a rubbed surface. Such a surface is not smooth which will hinder free switching of the LC molecules. It is an object of the present invention to obviate the above-mentioned problem.

According to an aspect, at least one of the sidewalls of at least one recess predetermines at least a first alignment of liquid crystal molecules contained in the recess due to a surface/liquid-crystal-molecule interaction.

The liquid crystal device will be discussed in further detail with reference to the accompanying drawings in which
Fig. 1 is a schematic view of a first embodiment of the liquid crystal device according to the invention having liquid crystal molecules in a first alignment;
Fig. 2 is a schematic view of the liquid crystal device shown in Fig. 1 having liquid crystal molecules in a second alignment;
Figs. 3, 4, 5, and 6 are top views of a recess of a second embodiment of the liquid crystal device according to the invention, having various stable states;
Figs. 7, 8, 9 and 10 are perspective views of the recesses shown in Figs. 3, 4, 5 and 6 respectively;
Fig. 11 is a top view of a profiled surface of another embodiment of the liquid crystal device according to the invention;
Fig. 12 is a sectional view of the profiled surface of Fig. 11 along the line AA;
Fig. 13 is a sectional view of the profiled surface of Fig. 11 along the line BB; and
Fig. 14 shows possible recesses of various embodiments of the device according to the invention.

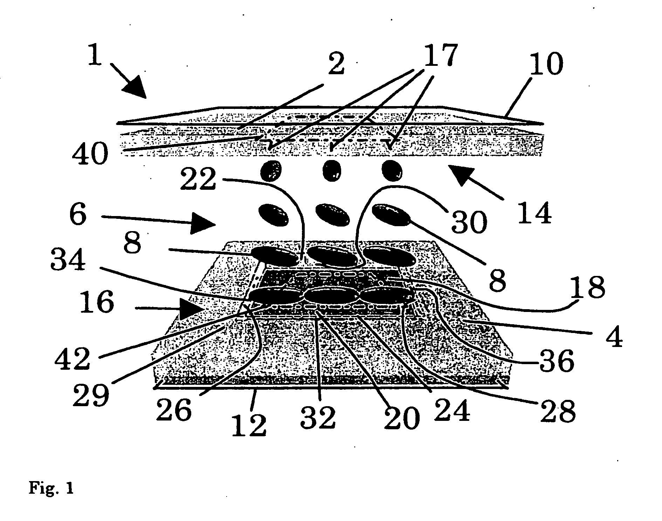

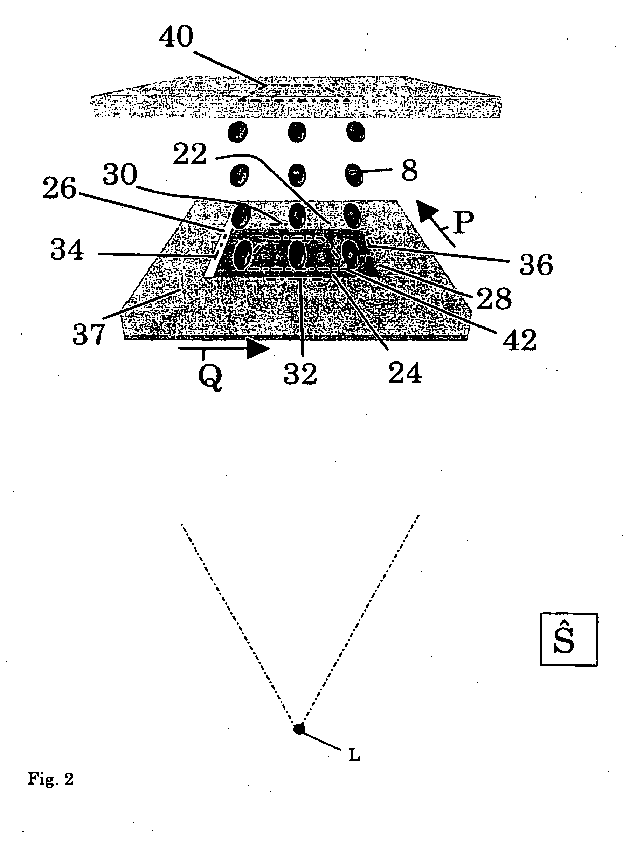

Fig. 1 shows a first embodiment of the liquid crystal device. The liquid crystal device 1 comprises a front panel 2, a back panel 4 and a liquid crystal 6 composed of rod-shaped liquid crystal molecules 8. In this exemplary embodiment, both panels 2, 4 may comprise a filter 10, 12 each allowing light from a light source L (Fig. 2) to be transmitted having a certain polarisation direction. The polarisation direction of light transmitted by the filter 10 of the front panel 2 is, in this embodiment, directed transversely to the polarisation direction of light transmitted by the filter 12 of the back panel 4.

Both the front panel 2 and the back panel 4 have a treated inside surface 14, 16. In this embodiment, the treated inside surface 14 of the front panel 2 may comprise an alignment structure formed by surface 17, shown in Fig. 1, as provided, for example, by conventional rubbing techniques for a rubbed polyimide (PI) surface configured to predetermine the alignment of the liquid crystal molecules 8 located at least near the inside surface 14. Hence, the surface 17 predetermines the alignment of liquid crystal molecules 8 located at least near the inside surface 14 of the front panel 2. It is understood, that instead of using a rubbed surface to create alignment, other known techniques of aligning liquid crystalline molecules can be used, such as photoalignment, amorphous carbon aligning technique, etc. It is also understood that instead of polyimide any other suitable material may be used. In the embodiment of Figs. 1 and 2, the profiled inside surface 16 of the back panel 4 comprises a recess 18 having a rectangular planar section. The recess 18 is formed by a bottom surface 20, first sidewall 22, a second sidewall 24, a third sidewall 26 and a fourth sidewall 28. In this embodiment, the first sidewall 22 and the second sidewall 24 are in alignment with each other and face each other. Also, the third sidewall 26 and the fourth sidewall 28 are also in alignment with each other and face each other. Although the sidewalls 22, 24, 26 and 28 are depicted perpendicular to the bottom surface 20, this does not exclude sidewalls, which are tilted with respect to the bottom surface at angles, which differ from 90°. The bottom surface 20 may be lubricated to tune the surface anchoring energy on the bottom surface 20 such that the liquid crystal molecules 8 inside the recess can be switched more easily. For example, lubrication could be achieved by covering the bottom surface 20 with molecules that form a liquid-like layer. This is a layer that has no positional or orientational order and provides a fluid-like, i.e. isotropic interface with the liquid crystal molecules, similar to the interface between an isotropic liquid, such as water, glycerine, etc..., with a liquid crystal. It is an important aspect that such a lubrication layer should have no memory effect, which is typical for ordered or semi-ordered materials, like solids, glass, polymeric and plastic materials. Another alternative is the inclusion of a thermal element to disrupt any state in order to switch to another state.

The sidewalls 22, 24, 26 and 28 predetermine the alignment of the liquid crystal molecules 8 located in the recess 18. At least two stable alignments can be distinguished. One alignment is directed along both the first sidewall 22 and the second sidewall 24. The other alignment is directed along both the third sidewall 26 and the fourth sidewall 28. Due to a surface/liquid-crystal-molecule interaction, the liquid crystal molecules 8 adjacent to one of the sidewalls 22, 24, 26 or 28 tend to be anchored into an alignment therewith.

With reference to Figure 2, when externally an electric field is generated in a first direction P, the liquid crystal molecules 8 align along the third sidewall 26 and the fourth sidewall 28. When the electric field is generated in the second direction Q, the liquid crystal molecules 8 are aligned along the first sidewall 22 and the second sidewall 24. This alignment is shown in Fig. 1. A person skilled in the art will acknowledge that the number of liquid crystal molecules shown is greatly reduced for clarity's sake.

For each shown configuration in figs 1-10, the longitudinal axis of most of the rod-shaped liquid crystal molecules 8 extends within a plane parallel to the inside surfaces 14, 16 of the front panel 2 and the back panel 4. This is also true for liquid crystal molecules which are located further away from the inside surfaces 14, 16 of the panels 2, 4. The liquid crystal molecules have a longitudinal axis which is slightly rotated with respect to liquid molecules which are located near it, but are located in a different plane parallel to the inside surfaces of the front panel and the back panel. As a consequence, the liquid crystal molecules form a twisted structure, wherein the liquid crystal molecules near the inside surface 14 of the front panel 2 are twisted at an angle of about 90° with respect to the molecules near the inside surface 16 of the back panel 4. This can be seen in Fig. 1. The phase in which liquid crystals form such structures is commonly referred to as the twisted nematic phase. It is understood that the twist angle could be different from 90°.

The device having such a recessed inside surface 16 can be efficiently manufactured, for instance using lithography processing techniques, more specifically optical and electron beam lithography processing techniques. Another possibility is to use an embossing technique, where the recesses are created by pressing a profiled surface, made of a hard material, into a soft material. Heating may be used to soften the surface material to be embossed. In particular, an advantage of the present invention is that, instead of a normally treated bottom surface, an alignment structure is provided that uses a surface interaction from upstanding sidewalls. This structure is easily manufacturable.

A material, from which an upper layer 37 of the back panel 2 may be manufactured, is a polymethyl methacrylate (PMMA) resist. PMMA is a suitable resist in electron beam lithography processes.The recesses are dimensioned to comprise at least a plurality of liquid crystal molecules,so that the bottom surface of the recesses preferably has a size between about 2·10⁻⁵ square micrometer and about 20 square micrometer. Typical dimensions may be 5 nanometer x 5 nanometer, 1 micrometer x 1 micrometer or 5 micrometer x 5 micrometer. The most suitable sizes are between about 0.5 square micrometer and about 20 square micrometer. The thickness of the PMMA layer may, for instance, be between 25 nanometer and 2000 nanometer. It is understood that any other material could be used with corresponding manufacturing technique.

As an alternative for the rubbed top inside surface 14 of the front panel 2, depicted in Fig. 1, the recessed structure 18 as shown for the bottom inside surface 16 could also be applied as alignment structure of the top inside surface, using the method suggested for preparing the bottom inside surface 16. A substrate 38 of the back panel 2 which substrate 38 supports the upper layer 37 is, in this embodiment, manufactured from a glass. Any other material, preferably transparent, may be suitable.

Electrodes 30, 32, 34, and 36 may be formed by chromium (Cr), gold (Au), or any suitable conducting material, including conducting polymers. The electrode structure is provided to generate an external field inside at least one of the recesses and facilitates in (re)orienting the liquid crystals. To facilitate switching the electrode structure may further comprise a fifth electrode 40 located inside the front panel 2 and a sixth electrode 42 located inside the back panel 4. Accordingly, the electric field can be directed in a third direction by applying the voltage to the fifth electrode 40 and the sixth electrode 42. In this embodiment, the third direction is directed transversely to the inside surfaces 14, 16 of the front panel 2 and the back panel 4. The fifth electrode 40 and the sixth electrode 42 are preferably manufactured from a transparent conductor, such as tin-doped indium oxide (ITO).

In one exemplary application of the optical device 1 illustrated in Figure 1, polarized light may enter the back panel 4 along an optical path through the recess 18, part of the liquid crystal 6, part of the front panel 2 and part of the back panel 4. Light entering the back panel 4 will be filtered by the filter 12 of the back panel 4 allowing only polarised light in the predetermined direction to enter the back panel.

In the alignment of the liquid crystal molecules in the recess 18 as depicted in Fig 1, the polarisation direction of the light will match the longitudinal direction of the liquid crystal molecules adjacent to the inside surface 16 of the back panel 4. The polarisation of light, which has entered the liquid crystal 6, will rotate along with the helical structure formed by the liquid crystal molecules 8 as it propagates through the liquid crystal 6 to the front panel 2. Once the light has reached the front panel 2, the polarisation of the light is in alignment with the polarisation direction of light, which is transmitted by the filter 10 of the front panel 2. Light can therefore propagate through the device virtually unhindered.

If the liquid crystal molecules in the recess 18 are in a second alignment as shown in Fig. 2, the polarisation direction of the light will be in a direction transverse to the longitudinal axes of the liquid crystal molecules adjacent to the inside surface 16 of the back panel 4. The light entering the liquid crystal 6 will not be rotated as it propagates through the liquid crystal 6 to the front panel 2. Therefore, the filter 10 of the front panel 2 will block the light.

As follows from Fig. 2, the longitudinal axes of the rod-shaped liquid crystal molecules 8 along the optical path are substantially aligned which causes the liquid crystal 6 to have birefringent properties.

If the liquid crystal molecules 8 located in the recess 18 are in the first alignment of Figure 1, thereby allowing for transmission of light along the optical path, and these liquid crystal molecules 8 are switched to the second alignment of Figure 2, a voltage may be applied to the fifth electrode 40 and the sixth electrode 42 to generate the electric field in the third direction, substantially transverse to the surface 16. The longitudinal axes of the liquid crystal molecules 8 located between bottom surface 20 of the recess 18 and the front panel 2 are thereby tilted out of their plane parallel to the inside surfaces 14, 16 into an unstable state. Hence, the liquid crystal molecules 8 located in the recess 8 leave the twisted nematic phase. In the absence of the liquid crystal in the twisted nematic state, the polarisation of the light, which has entered the liquid crystal 6, will not rotate along with the structure formed by the liquid crystal molecules 8 as it propagates through the liquid crystal 6 to the front panel. Hereafter, a voltage is applied between the third electrode 34 and fourth electrode 36 causing the electric field to be directed in the second direction for bringing the liquid crystal molecules located in the recess 18 to the second alignment.

If, at a later time, the liquid crystal molecules 8 located in the recess 18 are switched back to the first alignment of Figure 1, any electric field in the second direction still present is switched off. Then, a voltage may be applied to the fifth electrode 40 and the sixth electrode 42 to generate an electric field in the third direction. The longitudinal axes of the liquid crystal molecules 8 located between bottom surface 20 of the recess 18 and the front panel 2 are again tilted out of their plane parallel to the inside surfaces 14, 16 into said unstable state. At that point, the liquid crystal molecules cease to have said birefringent properties. Then, a voltage is applied between the first electrode and the second electrode causing the electric field to be directed in the third direction for bringing the liquid crystal molecules 8 located in the recess 18 to the first alignment.

In the embodiment shown in Figs 1 and 2 the first direction P of the electric field and the direction of the longitudinal axes of the liquid crystal molecules in the first alignment coincide and the second direction Q and the direction of the longitudinal axes of the liquid crystal molecules in the second alignment (see Fig 2) also coincide. This, however, is not necessary. Embodiments are possible in which the electric field in the first direction brings the longitudinal axes of the liquid crystal molecules in the first alignment, while the first direction and the direction of said longitudinal axes may differ slightly or even substantially. By the same token, embodiments are possible in which the electric field in the second direction brings the longitudinal axes of the liquid crystal molecules in the second alignment, while the second direction and the direction of said longitudinal axes may differ slightly or even substantially. In addition, the directions of the electric fields P and Q need not be aligned with any of the walls 22, 24, 26 or 28.

As discussed hereabove, it may be advantageous, but not necessary, to generate the voltage in the third direction when switching between the first alignment and the second alignment, since by doing so, switching between the stable alignments can be smoother.

The liquid crystal device may comprise a control unit S (Fig. 2) configured to alternately apply a voltage between the first and the second electrodes 30, 32 for directing the electric field in the first direction and apply the voltage between the third and fourth electrodes 34, 36 for directing the electric field in the second direction. The control unit S may further be configured to apply a voltage between the fifth electrode 40 and the sixth electrode 42 after applying the voltage between the first and the second electrodes 30, 32 and before applying the voltage between the third and fourth electrodes 34, 36. Likewise, the control unit Ŝ may be configured to apply a voltage between the fifth electrode 40 and the sixth electrode 42 before applying the voltage between the first and the second electrodes 30, 32 and after applying the voltage between the third and fourth electrodes 34, 36.

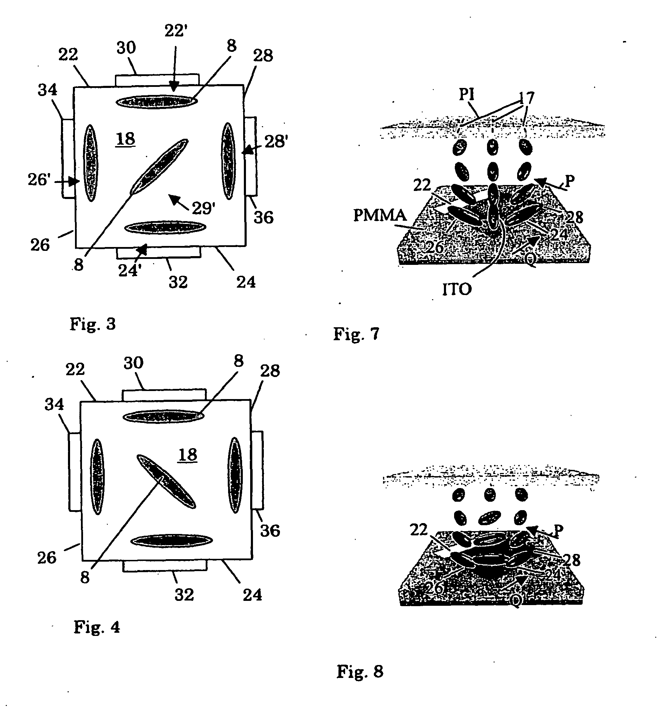

A second embodiment is disclosed referring to Figs. 3-10. In the embodiment of Figs. 3-10, the recess 18 is also comprised in the back panel 4. The main difference between the embodiment of Figs. 1 and 2 and the embodiment of Figs. 3-10 is that, in the latter, the treated surface 17 is configured in such a manner, that this surface 17 predetermines the alignment of liquid crystal molecules 8 located at least near the inside surface 14 of the front panel 2 to define an angle of about 45° with the sidewalls 22, 24, 26 and 28 of the recess 18. This is shown in Fig. 7. In another embodiment, the recess 18 may be comprised in the front panel 2. In yet another embodiment the front panel 2 and the back panel 4 each comprise a recess 18.

In this embodiment, an electrode structure having a first electrode 30 located inside the first sidewall 22 and a second electrode 32 located inside the second sidewall 24 has been provided. Applying a voltage to the first electrode 30 and the second electrode 32 can generate an electric field in the first direction P. In analogy, the electrode structure has a third electrode 34 located inside the third sidewall 26 and a fourth electrode 36 located inside the fourth sidewall 28. The electric field can be directed in the second direction Q by applying the voltage to the third electrode 34 and the fourth electrode 36. The electrodes need not be located inside the sidewalls. They may be located near the sidewalls. They may for instance be attached to the sidewalls. Furthermore, it is not necessary that the electrodes are located near a centre portion of the sidewalls. The electrodes may suitably be located near a corner of the recess 18.

Similar to the embodiment of Figs. 1 and 2, the sidewalls 22, 24, 26 and 28 predetermine the alignment of the liquid crystal molecules 8 located in the recess 18 due to said surface/liquid-crystal-molecule interaction. This is illustrated in Fig. 3 where the recess 18 is shown along with five liquid crystal molecules 8 one of which is not near any of the sidewalls and is, therefore, not aligned with any of the sidewalls and four of which are adjacent to one of the sidewalls and also aligned therewith.

In this exemplary embodiment, the alignments allow for four possible stable states for molecular alignment inside the recess 18. If the liquid crystal molecules are anchored strongly into their alignment with the respective sidewalls 22, 24, 26 or 28, the alignment of the liquid crystal molecules inside the recess 18 is the result of elastic frustrations induced by the difference in alignment of the molecules located near different sidewalls 22, 24, 26 or 28. In the recess 18, the liquid crystal molecules near each of the sidewalls 22, 24, 26 and 28 remain in alignment therewith (see Figs. 3, 4, 7 and 8). Near the sidewalls, domains 22', 24', 26' and 28' are defined by the liquid crystal molecules being in alignment with the respective sidewalls 22, 24, 26 and 28. The boundary region 29' between said four domains 22', 24', 26' and 28' forms a separate fifth domain 29'. The liquid crystal molecules 8 located in the fifth domain 29' can have either an alignment as shown in Figs. 3 and 7 or an alignment as shown in Figs. 4 and 8, whereby two of said four states are defined. In Figs. 3, 4, 7 and 8, only one liquid crystal molecule in each of the domains 22', 24', 26', 28' and 29' has been shown for the sake of clarity.

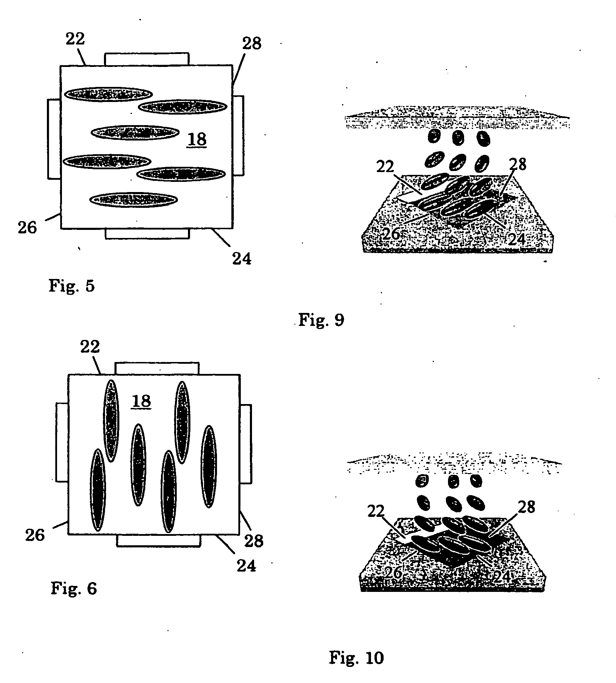

If the liquid crystal molecules are anchored weakly, the alignment of the liquid crystal molecules 8 near the sidewalls 22, 24, 26 or 28 can be adjusted at locations near the inside surface 16 of the back panel 4, as shown in Figs. 5, 6, 9 and 10. Thus, two further of said four states are defined.

If the liquid crystal molecules are anchored weakly, the liquid crystal molecules 8 align along the third sidewall 26 and the fourth sidewall 28, when an electric field is generated in the first direction P. When the electric field is generated in the second direction Q, the liquid crystal molecules 8 are aligned along the first sidewall 22 and the second sidewall 24. This is illustrated in Figs. 5 and 6.

In the embodiment of Figs. 3-10, the angle at which the liquid crystal molecules near the inside surface 14 of the front panel 2 are twisted with respect to the molecules near the inside surface 16 of the back panel 4 is +45° or -45° in the two further states shown in Figs. 5, 6, 9 and 10.

In the states shown in Figs. 3, 4, 7 and 8, this angle depends on the domain in which the latter liquid crystal molecules are located. The angle with respect to the molecules 8 in the domains 22' and 24' is about +45°. The angle with respect to the molecules 8 in the domains 26' and 28' is about -45°. The angle with respect to the molecules 8 in the fifth domain 29' is about 0° or +90°. The phase in which liquid crystals form such structures is commonly referred to as the twisted nematic phase, except the case at 0°.

If the liquid crystal molecules are anchored strongly, an operation with respect to the embodiment of Figs. 3-10 is applicable, which is similar to the operation of the embodiment of Figs. 1 and 2. However, by applying a sufficiently strong electric field, the strong anchoring can be overcome and one of the states shown in Figs. 5, 6, 9 or 10 can be achieved.

The light propagating along the optical path through the liquid crystal molecules located in such a recess 18 may form a pixel in a device for displaying images, such as a television screen, a computer display, or a display for cellular telephones. It is in such a case highly preferable that a plurality of such recesses with said electrode structures is provided in order to be able to generate images. The recesses may be provided in a regular geometric order on the inside surface 16. Such a device could also be used to phase or intensity modulate and shape a laser beam or optical pulse. It could be also used not only for displaying, but also for storing the information in the pixel.

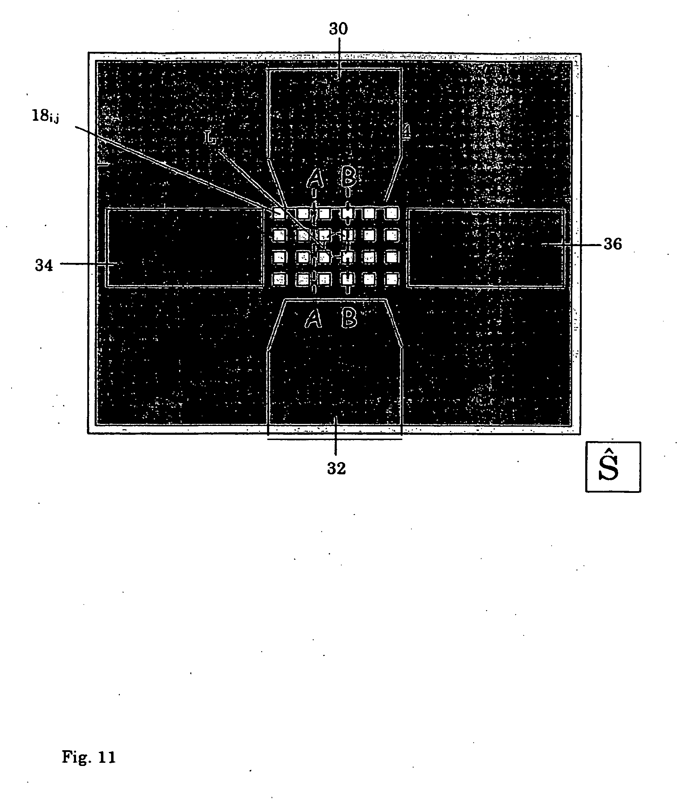

An alternative embodiment (shown in Fig. 11) is to provide the first electrode 30, the second electrode 32, the third electrode 34, and the fourth electrode 36 with a plurality of recesses 18_{i,j} (i=1, 2, 3, or 4; j=1, 2, 3, 4, 5, or 6) therebetween. Thus, a somewhat simpler device is provided, which may be easier and thus cheaper to manufacture. Also, by providing some of the recesses 18_{i,j} between the electrodes 30, 32, 34, and 36 with red light, some with blue light and some with green light, a colour display can be provided. As in a standard display, it can be also build in birefringent filter e.g. in back panel 4.

In Fig. 11, the recesses 18_{i,j} are arranged in an ordered structure. For most applications, it is preferable that the recesses 18_{i,j} are in an ordered structure, although in some cases the positions of the recesses 18 may not have a discernable order. The electrodes can also be arranged to orient an external field in another direction, for example in a direction diagonal with respect to the recesses 18_{i,j}.

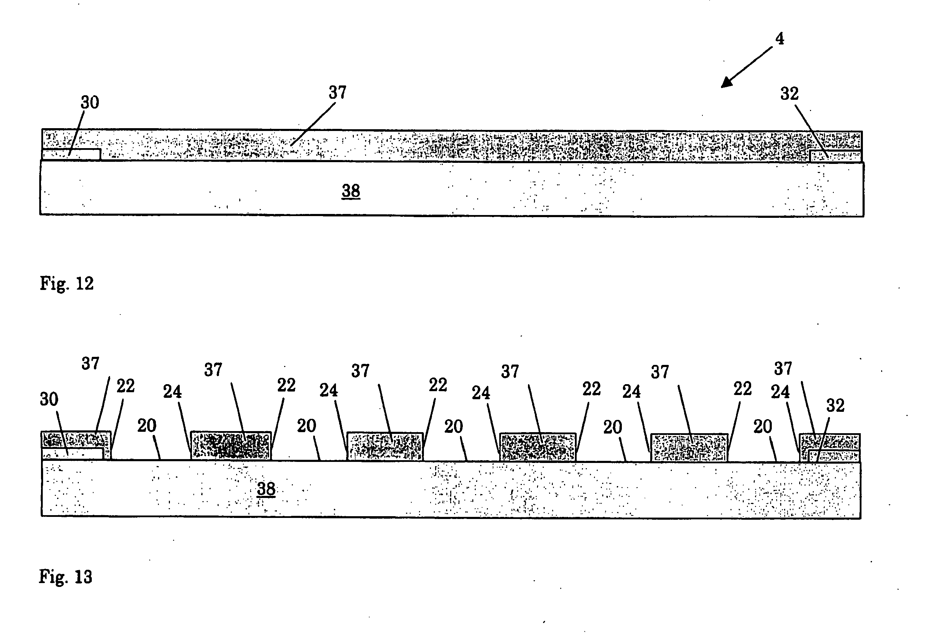

The liquid crystal device illustrated in Figs. 12 and 13 may be comprised in a screen of a device for displaying images and memorizing images or information. Preferably, a plurality of the liquid crystal devices 1 is provided in the device for displaying images. The device for displaying images may comprise a control unit S for controlling liquid crystal devices of the screen to provide dynamic and/or static images. Furthermore, the device for display images may comprise a light source L.

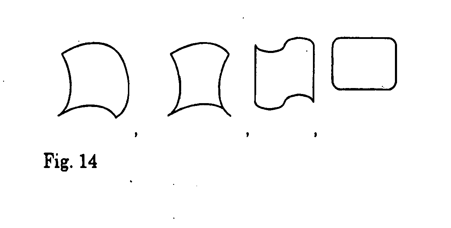

It will be apparent to a person skilled in the art that the invention is not limited to the embodiments disclosed hereinabove and that applications of the liquid crystal device may vary beyond those mentioned. Switching the molecules between the alignments to attain the different states of the liquid crystal device has been effected using electrical fields. However, magnetic fields may also be used. In addition, the switching may be facilitated by locally heating the liquid crystal close, or into the isotropic phase. This can be done, for instance, by using a focused light beam, which is absorbed and gives rise to an increased temperature. Furthermore, although in the examples, recesses are shown with four sidewalls, it will be clear that any number of sidewalls, including at least three sidewalls, is deemed to be comprised in the scope of the invention. Also, the invention is not restricted to embodiments having flat sidewalls. The sidewalls may be curved without departing from the scope of the invention as shown in Figure 14. Furthermore, the surface/liquid-crystal-molecule interaction is not necessarily such that the molecules are in alignment with the surface. The surface may interact with the molecules through a planar interaction, a homeotropic interaction between the liquid crystal molecules or a combination thereof. Moreover, the skilled person will recognise that term "comprising" does not exclude other elements or steps, and that "a" or "an" does not exclude a plurality. Also, reference signs in the claims shall not be construed as limiting the scope of the claims.

## Claims

1. A multistable liquid crystal device provided with a front panel, a back panel, at least one of which is provided with a profiled inside surface containing a plurality of recesses, each of which is formed by a smooth bottom surface and a plurality of sidewalls, the liquid crystal device further being provided with liquid crystal molecules, the liquid crystal molecules being located between the front panel and the back panel and some of the liquid crystal molecules being contained in the recesses, wherein, due to a surfacelliquid-crystal-molecule interaction between the liquid crystal molecules and at least one of said sidewalls of at least a said recess, alignment of liquid crystal molecules contained in the recess is predetermined in multistable mutually different structures of liquid crystal that are thermodynamically stable in the absence of external fields, **characterized in that** the bottom surface is provided with lubrication or a thermal element, for changing the surface/liquid-crystal-molecule interaction , so that, at least during switching from or to the first alignment, the liquid crystal molecules are freely orientable to facilitate surface switching and/or reorientation of the molecules.

2. Device according to any one of the preceding claims, wherein the first alignment defines a polarization state of radiation transmitted through the liquid crystal molecules.

3. Device according to any one of the preceding claims, wherein the bottom surface of the recess has a size between about 2·10-5 square micrometer and about 20 square micrometer.

4. Device according to any one of the preceding claims, wherein the device comprises a structure to generate an external field inside at least one of the recesses.

5. Device according to claim 4, wherein the structure is an electrode structure and the external field is an electric field.

6. Device according to claim 5, wherein the electrode structure comprises a first electrode located inside or near a first said sidewall and/or a second electrode located inside or near a second said sidewall; the electrode structure further comprising a third electrode located inside or near a third said sidewall and/or a fourth electrode located inside or near a fourth said sidewall; and wherein the electrode structure comprises a fifth electrode located inside or near the front panel and a sixth electrode located inside or near the back panel for directing the electric field in a third direction perpendicular to the bottom surfaces of the recesses.

7. Device according to claims 6, comprising a control unit configured to apply a voltage between the fifth electrode and the sixth electrode
• after applying the voltage between the first and the second electrodes and before applying the voltage between the third and fourth electrodes, and/or
• before applying the voltage between the first and the second electrodes and after applying the voltage between the third and fourth electrodes.

8. Device for displaying images, the device comprising a screen having a at least one liquid crystal device according to any one of the preceding claims, an light source for illuminating the screen and a control system for controlling the screen to provide dynamic and/or static images.

9. An information storage device, comprising a device according to any of claims 1-7.

## Patentansprüche

1. Multistabile Flüssigkristallvorrichtung mit einer Frontplatte und einer Rückplatte, von denen wenigstens eine mit einer profilierten Innenoberfläche versehen ist, die eine Vielzahl von Ausnehmungen aufweist, von denen jede eine ebene Bodenfläche und mehrere Seitenwände umfasst, ferner umfasst die Flüssigkristallvorrichtung Flüssigkristallmoleküle, wobei die Flüssigkristallmoleküle zwischen der Frontplatte und der Rückplatte angeordnet sind und einige der Flüssigkristallmoleküle in den Ausnehmungen aufgenommen sind, wobei aufgrund einer Oberflächen-Flüssigkristallmolekül-Wechselwirkung zwischen den Flüssigkristallmolekülen und wenigstens einer der Seitenwände der wenigstens einen Ausnehmung eine Ausrichtung der Flüssigkristallmoleküle, die in den Ausnehmungen aufgenommen sind, in multistabilen, wechselweise unterschiedlichen Flüssigkristallstrukturen, die in Abwesenheit von externen Feldern thermodynamisch stabil sind, vorgegeben ist, **dadurch gekennzeichnet, dass** die Bodenfläche mit Schmiermitteln oder einem thermischen Element zur Veränderung der Oberflächen-Flüssigkristall-Wechselwirkung versehen ist, um wenigstens während der Umschaltung von der oder in die erste Ausrichtung eine freie Orientierung der Flüssigkristallmoleküle zur Erleichterung der Oberflächenumschaltung und/oder Neuorientierung der Moleküle zu gewährleisten.

2. Vorrichtung nach Anspruch 1, wobei die erste Ausrichtung einen Polarisationszustand bestimmt, bei dem Strahlung durch die Flüssigkristallmoleküle transmittiert wird.

3. Vorrichtung nach einem der vorhergehenden Ansprüche, WObei die Bodenfläche der Ausnehmung eine Ausdehnung zwischen 2-10⁻⁵ Quadratmikrometer und ungefähr 20 Quadratmikrometer aufweist:

4. Vorrichtung nach einem der vorhergehenden Ansprüche, WObei die Vorrichtung eine Struktur zur Erzeugung eines externen Felds innerhalb wenigstens einer der Ausnehmungen aufweist.

5. Vorrichtung nach Anspruch 4, wobei die Struktur eine Elektrodenstruktur und das externe Feld ein elektrisches Feld ist.

6. Vorrichtung nach Anspruch 5, wobei die Elektrodenstruktur eine erste innerhalb oder nahe einer ersten Seitenwand angeordnete Elektrode und/oder eine zweite innerhalb oder nahe einer zweiten Seitenwand angeordnete Elektrode umfasst; die Elektrodenstruktur umfasst weiterhin eine dritte Elektrode, die innerhalb oder nahe einer dritten Seitenwand angeordnet ist und/oder eine vierte Elektrode, die innerhalb oder nahe einer vierten Seitenwand angeordnet ist; und wobei die Elektrodenstruktur eine fünfte Elektrode, die innerhalb oder nahe der Frontplatte und eine sechste Elektrode, die innerhalb oder nahe der Rückplatte angeordnet ist, um das elektrische Feld in einer dritten Richtung senkrecht zur Bodenfläche der Ausnehmung zu steuern.

7. Vorrichtung nach Anspruch 6, umfassend eine Steuereinheit zur Bereitstellung einer elektrischen Spannung zwischen der fünften Elektrode und der sechsten Elektrode
• nach Anlegen der elektrischen Spannung zwischen der ersten und der zweiten Elektrode und vor Anlegen der elektrischen Spannung zwischen der dritten und der vierten Elektrode und/oder
• vor Anlegen der elektrischen Spannung zwischen der ersten und der zweiten Elektrode und nach Anlegen der elektrischen Spannung zwischen der dritten und der vierten Elektrode ausgebildet ist.

8. Vorrichtung zur Darstellung von Bildern, die Vorrichtung umfasst einen Bildschirm mit wenigstens einer Flüssigkristallvorrichtung nach einem der vorhergehenden Ansprüche sowie eine Lichtquelle zur Beleuchtung des Bildschirms und ein Steuersystem zur Steuerung des Bildschirms, um dynamische und/oder statische Bilder bereitzustellen.

9. Informationsspeichereinrichtung mit einer Vorrichtung nach einem der Ansprüche 1 bis 7.

## Revendications

1. Dispositif à cristaux liquides multistable pourvu d'un panneau avant et d'un panneau arrière, dont au moins l'un est pourvu d'une surface intérieure profilée contenant une pluralité d'évidements, dont chacun est formé d'une surface de fond lisse et d'une pluralité de parois latérales, le dispositif à cristaux liquides étant en outre pourvu de molécules en cristaux liquides, les molécules en cristaux liquides étant situées entre le panneau avant et le panneau arrière et certaines des molécules en cristaux liquides étant contenues dans les évidements, dans lequel, en raison d'un interaction surface/molécules en cristaux liquides entre les molécules en cristaux liquides et au moins l'une desdites parois latérales d'au moins un dit évidement, un alignement de molécules en cristaux liquides contenues dans l'évidement est prédéterminé dans différentes structures de cristaux liquides multistables mutuellement différentes qui sont stables au plan thermodynamique en l'absence de champs externes, **caractérisé en ce que** la surface de fond est pourvue d'une lubrification ou d'un élément thermique pour modifier l'interaction surface/molécule en cristaux liquides, de sorte que, au moins pendant la commutation à partir du premier alignement ou vers celui-ci, les molécules en cristaux liquides peuvent être orientées librement pour faciliter la commutation de surface et/ou la réorientation des molécules.

2. Dispositif selon l'une quelconque des revendications précédentes, dans lequel le premier alignement définit un état de polarisation du rayonnement transmis à travers les molécules en cristaux liquides.

3. Dispositif selon l'une quelconque des revendications précédentes, dans lequel la surface de fond de l'évidement à une aire comprise entre environ 2.10⁻⁵ micromètres carrés et environ 20 micromètres carrés.

4. Dispositif selon l'une quelconque des revendications précédentes, dans lequel le dispositif comprend une structure pour générer un champ externe à l'intérieur d'au moins l'un des évidements.

5. Dispositif selon la revendication 4, dans lequel la structure est une structure d'électrode et le champ externe est un champ électrique.

6. Dispositif selon la revendication 5, dans lequel la structure d'électrode comprend une première électrode située à l'intérieur ou à proximité d'une première dite paroi latérale et/ou une deuxième électrode située à l'intérieur ou à l'extérieur d'une deuxième dite paroi latérale ; la structure d'électrode comprenant en outre une troisième électrode située à l'intérieur ou à proximité d'une troisième dite paroi latérale et/ou une quatrième électrode située à l'intérieur ou à proximité d'une quatrième dite paroi latérale ; et dans lequel la structure d'électrode comprend une cinquième électrode située à l'intérieur ou à proximité du panneau avant et une sixième électrode située à l'intérieur ou à proximité du panneau arrière pour diriger le champ électrique dans une troisième direction perpendiculaire aux surfaces de fond des évidements.

7. Dispositif selon la revendication 6, comprenant une unité de commande configurée pour appliquer une tension entre la cinquième électrode et la sixième électrode
• après application de la tension entre les première et deuxième électrodes et avant application de la tension entre les troisième et quatrième électrodes et/ou
• avant application de la tension entre les première et deuxième électrodes et après application de la tension entre les troisième et quatrième électrodes.

8. Dispositif pour afficher des images, le dispositif comprenant un écran ayant au moins un dispositif à cristaux liquides selon l'une quelconque des revendications précédentes, une source de lumière pour éclairer l'écran et un système de commande pour commander l'écran afin de fournir des images dynamiques et/ou statiques.

9. Dispositif de stockage d'informations comprenant un dispositif selon l'une quelconque des revendications 1 à 7.
